# EUROPÄISCHE PATENTSCHRIFT

(11) **EP 0 713 001 B1**
(45) Veröffentlichungstag und Bekanntmachung des Hinweises auf die Patenterteilung: **10.03.1999**
(21) Anmeldenummer: 95117785.6
(22) Anmeldetag: 11.11.1995
(51) Int. Cl.: F02C 1/02, F01D 15/10, F01D 15/12, F01D 25/18

(54) **Gas-Expansionsmaschine**
Gas turbine expander
Turbine de détente à gaz

(30) Priorität: 15.11.1994 DE 9418307 U
(43) Veröffentlichungstag der Anmeldung: 22.05.1996
(73) Patentinhaber: ENERGIEVERSORGUNG LEVERKUSEN GMBH, D-51371 Leverkusen (DE)
(72) Erfinder: Kück Elmar, 52382 Niederzier (DE); Siefen Heinz, 51375 Leverkusen (DE)
(74) Vertreter: Selting, Günther, Dipl.-Ing.

(56) Entgegenhaltungen:
- EP-A- 0 009 843
- EP-A- 0 025 974
- EP-A- 0 598 183
- DE-A- 2 603 359
- DE-U- 9 215 695
- US-A- 3 722 321

## Beschreibung

Die Erfindung betrifft eine Gas-Expansionsmaschine zum Entspannen von Gas, insbesondere Erdgas, das unter hohem Druck geliefert wird und mit niedrigerem Druck in ein zu den Endverbrauchern führendes Verteilernetz eingespeist werden soll.

In Fernleitungen steht Erdgas unter einem relativ hohen Druck in der Größenordnung von 50 bar, während im Verbrauchernetz ein niedrigerer Druck von etwa 10 bar herrscht. Am Übergang von dem Fernleitungsnetz zum Verteilernetz sind Gas-Expansionsanlagen erforderlich, in denen eine Druckreduzierung erfolgt.

Aus DE-G 92 15 695.5 ist eine Erdgas-Expansionsanlage bekannt, bei der die Gasentspannung in einer Turbine erfolgt, wobei das Gas das Schaufelrad der Turbine antreibt. Unmittelbar hinter der Turbine sitzt ein Stromgenerator, dessen Welle in Magnetlagern gelagert ist und der in einem druckdichten Gehäuse untergebracht ist, das durch den Spalt der Generator- und Turbinenwelle mit dem Niederdruckteil der Turbine verbunden ist. Durch diesen Spalt strömt Gas in das Generatorgehäuse, aus dem das Gas durch einen Kühlauslaß abgeführt wird. Das das Generatorgehäuse durchströmende Gas bewirkt somit eine Kühlung des Generators. Da in dem Generatorgehäuse keine bewegten Teile vorhanden sind, die Reibung mit anderen Komponenten haben, wird kein Abrieb erzeugt, so daß das Gas nicht durch Fremdstoffpartikel verunreinigt werden kann. Das Generatorgehäuse ist druckdicht ausgeführt, so daß selbst im Falle eines sekundären Schnellabschlusses in der Niederdruck-Gasleitung kein Gas in die Atmosphäre entweicht. Die Lagerung der Generatorwelle ist schmierstofffrei.

Magnetgelagerte Gas-Expansionsmaschinen, bei denen die Turbine den permanent erregten Generator unmittelbar antreibt, eignen sich nur für relativ geringe Leistungen in der Größenordnung von 400 - 800 kW. Bei größeren Leistungen müssen Turbinen eingesetzt werden, deren Drehzahl zwischen 20 000 - 30 000 U/min. liegen. Es ist zweckmäßig, den Generator mit einer niedrigeren Drehzahl in der Größenordnung von 1 500 U/min. zu betreiben, um bei direktem Netzbetrieb Netzkonformität zu ermöglichen. Gas-Expansionsmaschinen mit hoher Leistung haben daher ein Untersetzungsgetriebe zwischen der Turbinenwelle und der Generatorwelle. Das Untersetzungsgetriebe enthält Zahnräder, die eine Ölschmierung benötigen. Daher ist es erforderlich, das Untersetzungsgetriebe von dem Gasweg zu trennen, weil andernfalls das Gas durch das Öl verschmutzt würde. Die Abdichtung des Getriebeteils von dem Turbinenteil ist mit großen Schwierigkeiten verbunden. Wenn die Abdichtung mit Gleitdichtungen erfolgt, ist eine Schmierung erforderlich, wodurch das Gas mit Schmiermittel in Berührung kommt. Ferner ist zu berücksichtigen, daß bei einem Schnellschluß der Niederdruck-Gasleitung in dieser Gasleitung der hohe Gasdruck ansteht. Aus diesem Grund müßten die Dichtungen so ausgelegt sein, daß sie dem hohen Gasdruck standhalten. Dies würde einen erheblichen Dichtungsaufwand erfordern und das Problem der Verunreinigung des Gasstroms durch Abrieb und Schmiermittel dennoch nicht lösen.

In EP-A-25 974 ist eine Erdgas-Expansionsmaschine beschrieben, bei der die das Turbinenrad tragende Welle einerseits in einem Gleit- oder Wälzlager gelagert ist und andererseits von einem Planetenradgetriebe zentriert wird. Ein Gehäuse, das sowohl das Lager als auch das Planetenradgetriebe enthält, erfordert eine Schmierung, so daß die in dem Gehäuse befindliche Gasatmosphäre mit Öl und Abrieb verschmutzt werden kann. Sowohl in dem das Getriebe enthaltenden Gehäuseteil als auch in dem Lagerbereich des Gehäuses können Partikel freigesetzt werden, die sich in dem Gehäuse ausbreiten, ohne daß ein gerichtetes Abführen erfolgt.

Der Erfindung liegt die Aufgabe zugrunde, eine Gas-Expansionsmaschine zu schaffen, die trotz Verwendung eines Untersetzungsgetriebes ohne aufwendige Wellendichtungen auskommt.

Die Lösung dieser Aufgabe erfolgt erfindungsgemäß mit den Merkmalen des Anspruchs 1.

Bei der erfindungsgemäßen Gas-Expansionsmaschine ist die Turbinenwelle in einer Magnetlagereinheit berührungsfrei gelagert, wodurch der Einsatz von Schmiermittel im Lagerbereich vermieden wird. Die Magnetlagereinheit ist eine selbständige Einheit, die die Turbinenwelle sowohl in axialer Richtung als auch in radialer Richtung berührungsfrei lagert. Der Wellendurchgang vom Turbinenteil in den Lagerteil ist gasdurchlässig, d.h. nicht mit einer reibenden Dichtung versehen. Dadurch strömt Gas vom Niederdruckteil der Turbine in den Lagerteil. Die Magnetlagereinheit ist mit dem Untersetzungsgetriebe und dem Generator in einem druckdichten Gesamtgehäuse untergebracht, welches in gasdurchlässiger Verbindung mit dem Turbinenteil steht. Dieses Gesamtgehäuse ist mit einem steuerbaren Gasauslaß versehen, durch den die Menge des abströmenden Gases gesteuert werden kann. Durch Veränderung des Durchflusses des abströmenden Gases kann der Gasdruck im Gesamtgehäuse variiert werden. Durch eine Regeleinrichtung wird beim Betrieb der Expansionsmaschine der Gasdruck so geregelt, daß er im Bereich des Getriebegehäuses nur gering über dem äußeren Atmosphärendruck liegt. Der Gasdruck im Bereich des Getriebegehäuses beträgt weniger als 1 bar, vorzugsweise weniger als 500 mbar. Der Grund dafür, einen niedrigen Gasdruck zu erzeugen, liegt darin, daß sich im Innern des Getriebegehäuses der gleiche stationäre Druck einstellt wie außerhalb des Getriebegehäuses. Bei höherem Druck steigen die Ventilationsverluste des Getriebes an. Daher wird das Getriebe unter einem Gasdruck betrieben, der nur geringfügig über dem Atmosphärendruck liegt. Andererseits muß der Gasdruck so groß sein, daß er eine Sperrwirkung hat, die verhindert, daß bei Undichtigkeiten von außen Luft in das Gesamtgehäuse eindringt. Das Getriebegehäuse ist für Gas durchlässig, so daß generell im Innern des Getriebegehäuses der gleiche Druck herrscht wie außerhalb. Andererseits ist das Getriebegehäuse so ausgebildet, daß kein Öl aus ihm entweicht. Die Öldichtheit wird jedoch ohne Verwendung von Gleitdichtungen erreicht, also ausschließlich durch Spalt- oder Labyrinthdichtungen, Schleuderringe an den Wellen oder hinreichende Abstände der Wellendurchgänge von den ölführenden Bereichen. Wichtig ist, daß die Gasatmosphäre in dem Gesamtgehäuse nicht durch Öl oder Abrieb verschmutzt werden kann. Hierzu ist das Getriebegehäuse, das notwendigerweise für die Zahnradschmierung Öl enthalten muß, öldicht gekapselt. In dem Gesamtgehäuse sind keinerlei Gleitdichtungen vorhanden. Solche Gleitdichtungen würden eine Umlaufschmierung erfordern und eine Verunreinigung der Gasatmosphäre hervorrufen.

Die Magnetlagereinheit, das Untersetzungsgetriebe und der Generator sind vorzugsweise in auswechselbaren Gehäuseeinheiten untergebracht, die das Gesamtgehäuse bilden. Diese Gehäuseeinheiten sind abdichtend miteinander verbunden, jedoch bestehen zwischen ihnen Gasdurchlässe. Das Gesamtgehäuse muß hochdruckfest sein, d.h. einem Innendruck von mindestens etwa 50 bar standhalten. Zwar herrscht in dem Gesamtgehäuse normalerweise nur der niedrige Druck der Gasatmosphäre, jedoch ist zu berücksichtigen, daß im Falle eines Schnellabschlusses der Niederdruck-Gasleitung durch den turbinenseitigen Gaseinlaß im Gesamtgehäuse der volle Hochdruck entstehen kann. Die Vermeidung von Wellendichtungen ist auch deshalb wichtig, weil solche Dichtungen dem Hochdruck standhalten müßten und weil die Gefahr besteht, daß bei Alterung oder Verschleiß die Dichtungen undicht werden oder aus ihren Sitzen herausgedrückt werden. Die Verwendung eines druckdichten Gesamtgehäuses, in dem auch der Generator untergebracht ist, hat den Vorteil, daß außer dem Durchgang der Turbinenwelle keine Wellendurchgänge vorhanden sind.

Die Magnetlagereinheit lagert die mit hoher Drehzahl rotierende Turbinenwelle, die zugleich die Eingangswelle des Untersetzungsgetriebes bildet oder mit dieser verbunden ist. Die Ausgangswelle des Untersetzungsgetriebes kann in dem Generator gelagert sein. Da die Generatorwelle mit relativ geringer Drehzahl läuft, sind hierfür keine Magnetlager erforderlich. Die Lagerung der relativ langsam rotierenden Generatorwelle kann mit gekapselten Wälzlagern erfolgen. Die Kapselung dieser Wälzlager sorgt dafür, daß das Schmiermittel nicht nach außen dringt. Im übrigen benötigen solche Wälzlager keine Umlauf schmierung. Sie werden in der Regel mit Fett geschmiert, das mit einer Kapselung zurückgehalten und am Herausdringen gehindert wird.

Das Untersetzungsgetriebe benötigt keine eigenen Lager am Hauptwellenstrang. Es reicht aus, wenn die Eingangswelle am Turbinenlager und die Ausgangswelle durch die Generatorlager gelagert ist. Wenn das Untersetzungsgetriebe als Planetenradgetriebe ausgebildet ist, haben die Planetenradstufen eine solche Anpassungsfähigkeit, daß sie selbstausrichtend wirken und somit geringfügige Fehlausrichtungen des Getriebegehäuses in bezug auf die Wellen zulassen.

Ein besonderer Vorteil der Erfindung besteht darin, daß das entspannte relativ kalte Gas das Gesamtgehäuse ausfüllt und auch zur Kühlung des Generators benutzt werden kann.

Im Falle eines Schnellabschlusses entsteht in dem Gesamtgehäuse vorübergehend ein hoher Druck. Um bei einer nachfolgenden Beendigung der Absperrung der Gasleitung zu verhindern, daß aus dem Getriebegehäuse heraus Gas, das mit Öl beladen ist, in das Gesamtgehäuse eintritt, ist gemäß einer bevorzugten Weiterbildung der Erfindung das Innere des Getriebegehäuses mit einer Druckentlastungsleitung verbunden, die zu einem außerhalb des Gesamtgehäuses befindlichen Ablaß führt. Diese Druckentlastungsleitung ermöglicht das Ablassen von Überdruck aus dem Getriebegehäuse. Sie ist bei Normalbetrieb geschlossen.

Im folgenden wird unter Bezugnahme auf die Zeichnungen ein Ausführungsbeispiel der Erfindung näher erläutert.

Es zeigen:

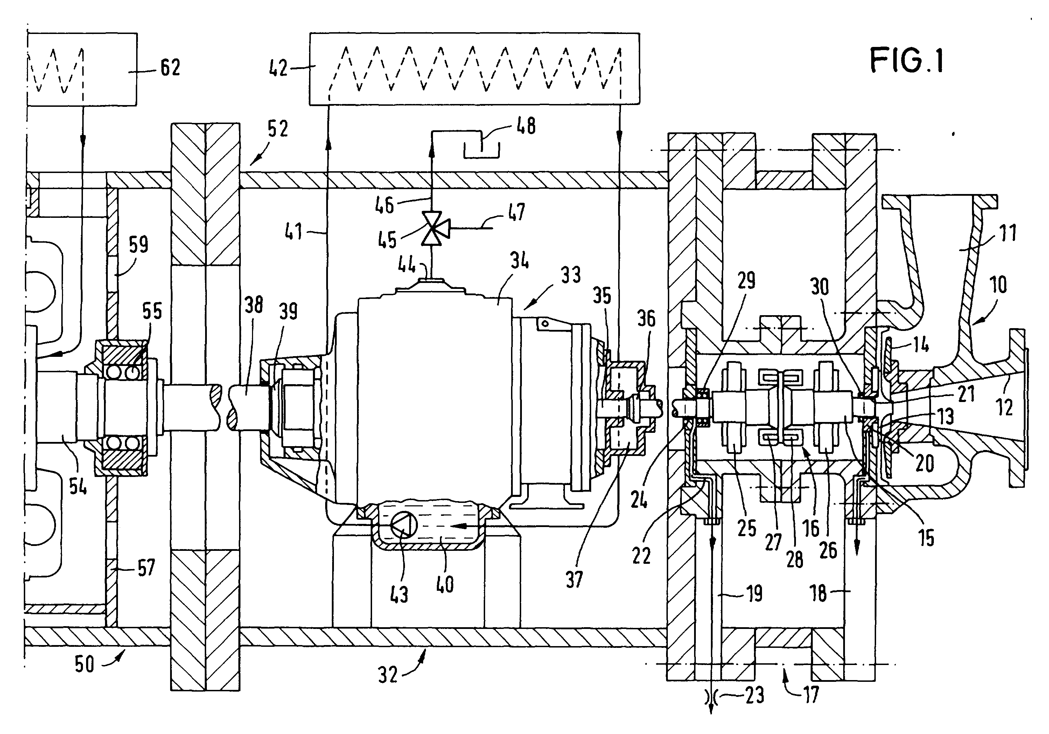

- Fig. 1: einen schematischen Längsschnitt durch den Turbinen- und Getriebeteil der Gas-Expansionsmaschine und

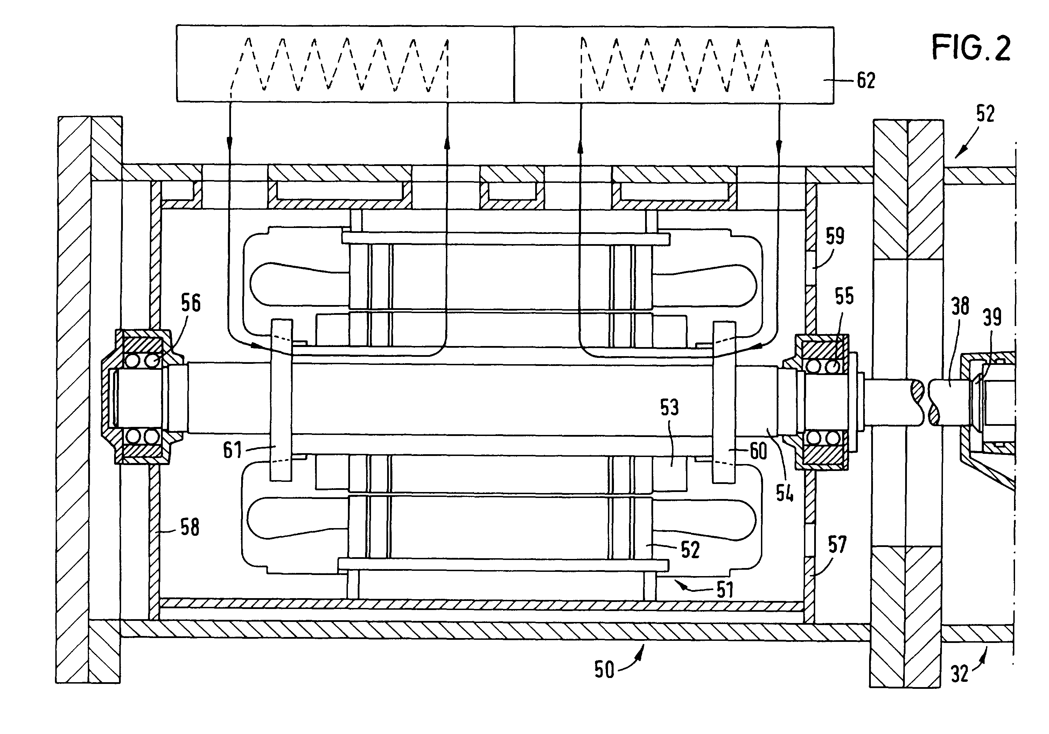

- Fig. 2: einen Längsschnitt durch den Generatorteil.

Die Maschine weist eine Expasionsturbine 10 auf, deren Hochdruckeinlaß 11 mit einer Gas-Lieferleitung verbunden ist, in der ein Druck von z.B. 50 bar herrscht. Dieses Gas wird in der Turbine 10 entspannt und dann dem Auslaß 12 zugeführt, der an eine Niederdruckleitung angeschlossen ist, in der ein Druck von z.B. 10 bar herrscht. Da sich das Gas beim Entspannen abkühlt, wird es zuvor erwärmt, um zu verhindern, daß das entspannte Gas zu kalt wird. Die Turbine 10 weist ein Schaufelrad 13 auf und einen dem Schaufelrad 13 vorgesetzten Leitapparat 14, der verstellt werden kann, um die Anströmung des Schaufelrades zu verändern. Das Schaufelrad 13 ist an der Turbinenwelle 15 befestigt, die in einer Magnetlagereinheit 16 gelagert ist.

Die Magnetlagereinheit 16 ist in einer selbständigen Gehäuseeinheit 17 untergebracht, die an den entgegengesetzten Enden Flansche 18,19 aufweist, um mit anderen Gehäuseeinheiten verbunden zu werden. An den Flansch 18 ist die Turbine 10 angesetzt. Der Wellendurchgang 20 der Turbinenwelle durch die Wand der Gehäuseeinheit 17 ist auf der Schaufelradseite durch eine Spalt- oder Labyrinthdichtung abgedichtet, die einen Gaseinlaß 21 bildet, durch den entspanntes Gas von der Turbine 10 in die Gehäuseeinheit 17 einströmt. Dieses Gas strömt an der Magnetlagereinheit 16 entlang und kühlt diese. Es wird am entgegengesetzten Ende der Magnetlagereinheit durch einen Gasauslaß 22 abgeführt, der ein gesteuertes Drosselorgan 23 enthält. Die ständige Durchströmung der Magnetlagereinheit 16 mit kaltem Gas bewirkt eine Kühlung der Magnetlagereinheit.

Die Turbinenwelle 15 ist ausgangsseitig durch einen Wellendurchgang 24 geführt, der ebenfalls als Spalt- oder Labyrinthdichtung oder Spaltdichtung ausgeführt ist und keine reibende Dichtung enthält.

Die Magnetlagereinheit 16 enthält radiale Magnetlager 25,26 und zwischen diesen axiale Magnetlager 27,28. Die Magnet lager wirken berührungsfrei magnetisch auf die Generatorwelle 15 und zentrieren diese entlang der vorgesehenen Wellenachse sowohl in axialer als auch in radialer Richtung. Zusätzlich sind Fanglager 29,30 vorgesehen, die als Wälzlager ausgebildet sind und die Generatorwelle dann abfangen, wenn die Magnetlagervorrichtung ausfällt.

Die Turbinenwelle 15 führt in eine weitere Gehäuseeinheit 32 hinein, die das Untersetzungsgetriebe 33 enthält. Das Untersetzungsgetriebe weist ein Getriebegehäuse 34 auf, in dem ein mehrstufiges Planetenradgetriebe untergebracht ist. Die Eingangswelle 35 ist mit der Turbinenwelle 15 verbunden. Auf der Eingangswelle 35 sitzt ein Schleuderring 36, um Öl, das entlang der Eingangswelle 35 vordringt, in einen Auffangraum 37 abzuschleudern. Der Wellendurchgang der Eingangswelle 35 in das Getriebe 33 enthält ebenfalls keine reibende Dichtung. Er ist daher drosselnd gasdurchlässig.

In gleicher Weise ist der Wellendurchgang der Ausgangswelle 38 des Getriebes 33 ausgeführt. Auf der Ausgangswelle 38 sitzt ein Schleuderring 39, der Öl radial abschleudert. Der Wellendurchgang ist auch hier ohne Reibdichtung ausgebildet.

Die Eingangswelle 35 des Getriebes 33 rotiert mit einer Drehzahl von etwa 30 000 U/min., während die Ausgangswelle 38 mit etwa 1 500 U/min. rotiert.

Zur Schmierung der Räder des Getriebes 33 ist im Getriebegehäuse 34 ein Ölsumpf 40 vorhanden. Dieser Ölsumpf 40 ist an einen Ölkreislauf 41 angeschlossen, der zu einem Ölkühler 42 und von dort zurück zum ölsumpf führt. Der Ölkühler 42 ist außerhalb der Gehäuseeinheit 32 angeordnet und die Leitungen des Ölkreislaufs 41 führen durch die Gehäusewand hindurch. Der Ölkühler 42 ist ein Wärmetauscher, der beispielsweise mit dem Prozeßgas gekühlt wird. Dadurch wird das Prozeßgas erwärmt. Die Pumpe 43 des Ölkreislaufs befindet sich im Innern des Getriebegehäuses 34 im Ölsumpf 40. Dadurch wird erreicht, daß die Pumpe 43 mit ihren rotierenden Teilen und Abdichtungen nicht der Gasatmosphäre im Innern der Gehäuseeinheit 32 ausgesetzt wird.

Auf diese Weise wird verhindert, daß die Pumpe 43 mit Abrieb oder Öl die Gehäuseatmosphäre kontaminiert.

Das Getriebegehäuse 34 weist eine Druckentlastungsöffnung 44 auf, die ein Ölfilter enthält und über ein Ventil 45 einerseits an eine Druckentlastungsleitung 46 und andererseits an eine Ausgleichsöffnung 47 angeschlossen ist. Das Ventil 45 verbindet die Druckentlastungsöffnung 44 entweder mit der Druckentlastungsleitung 46 oder mit der Ausgleichsöffnung 47. Die Druckentlastungsleitung 46 führt aus der Gehäuseeinheit 32 heraus zu einem Ablaß 48. Die Ausgleichsöffnung 47 mündet in das Innere der Gehäuseeinheit 32.

Beim Betrieb der Expansionsmaschine verbindet das Ventil 45 zunächst die Öffnung 44 mit der Ausgleichsöffnung 47, wobei sich während des Laufens des Getriebes 33 ein Druckausgleich einstellt, so daß der Druck in der Gehäuseeinheit 32 gleich dem Innendruck des Getriebegehäuses 34 wird. Dieser Druck wird durch eine die Drosseleinrichtung 23 verstellende Regeleinrichtung konstantgehalten. Er beträgt beispielsweise 500 mbar über Atmosphärendruck. Im Falle einer Schnellabschaltung hinter dem Niederdruckauslaß 12 gelangt der volle statische Druck des Einlasses 11, durch die Wellendurchgänge 20 und 24 gedrosselt, langsam in die Gehäuseeinheit 32, so daß sich dort der hohe Druck aufbaut. Wenn anschließend der Schnellschluß wieder geöffnet wird, entsteht in der Gehäuseeinheit 32 wieder ein niedrigerer Druck, jedoch bleibt der Hochdruck im Innern des Getriebegehäuses 34 zunächst noch erhalten. Damit dieser Hochdruck sich entladen kann, wird die Ausgleichsöffnung 47 gesperrt und das Ventil 45 wird zum Ablaß 48 hin geöffnet. Das mit Öl beladene Gas strömt dann aus dem Getriebegehäuse 34 in den Ablaß 48. Das Ventil 45 öffnet also zum Ablaß 48 hin, wenn der Druck in dem Gehäuse über einen vorgegebenes Maß abfällt oder in dem Getriebegehäuse ein Überdruck herrscht, der ein vorgegebenes Maß übersteigt. Das Innere der Gehäuseinheit 32 ist mit dem Innern einer weiteren Gehäuseeinheit 50 verbunden, die den stromerzeugenden Generator 51 enthält. Die Gehäuseeinheiten 17,32,50 bilden zusammen ein Gesamtgehäuse 52, das hochdruckdicht ausgebildet ist, d.h. dem hohen Druck am Einlaß widersteht. Dieses Gesamtgehäuse hat als einzigen Wellendurchgang den Wellendurchgang 20 der Turbinenwelle 15. Es ist im übrigen vollständig geschlossen. Die einzelnen Gehäuseeinheiten bilden modulartige Bausätze, die einzeln ausgewechselt werden können.

Der Generator 51 weist einen Stator 52 auf, der einen Rotor 53 umgibt. Der Rotor 53 ist auf der Rotorwelle 54 montiert, die zu beiden Enden des Rotors in Lagern 55,56 gelagert ist. Diese Lager sind gekapselte Wälzlager, die mit Fett geschmiert sind, wobei die Kapselung verhindert, daß Fett austritt. Die Lager 55,56 sind an Tragwänden 57,58 montiert, die Öffnungen für den Gasdurchgang aufweisen.

Auf der Rotorwelle 54 sind Ventilatorräder 60,61 befestigt, die eine Kühlgasströmung durch den Generator 51 bewirken. Die Ventilatorräder 60,61 wälzen das Gas in der Gehäuseeinheit 50 in geschlossenen Kreisläufen um. Diese Kreisläufe führen zu einem Gaskühler 62 und von dort zurück in die Gehäuseeinheit 50. Die Abwärme des Gaskühlers wird zur Aufheizung des Prozeßgases vor oder nach der Expansion benutzt. Der Gaskühler 62 kann als Bestandteil des Gesamtgehäuses 52 betrachtet werden. Er ist ebenfalls hochdruckfest ausgebildet.

Dagegen braucht das Getriebegehäuse 34 nicht hochdruckfest zu sein, weil bei ihm der Außendruck stets gleich dem Innendruck ist.

## Patentansprüche

1. Gas-Expansionsmaschine mit einer Expansionsturbine (10) und einem von der Turbine (10) über ein Übersetzungsgetriebe (33) angetriebenen Generator (51),
**dadurch gekennzeichnet,**
daß die Welle (15) der Turbine (10) in einer Magnetlagereinheit (16) berührungsfrei gelagert ist,
daß die Magnetlagereinheit (16) mit dem Untersetzungsgetriebe (33) und dem Generator (51) in einem gemeinsamen druckdichten Gesamtgehäuse (52) untergebracht ist, das zur Niederdruckseite der Turbine (10) hin einen Gaseinlaß (21) aufweist und mit einem steuerbaren Gasauslaß (22) versehen ist,
daß das Untersetzungsgetriebe (33) ein ölenthaltendes Getriebegehäuse (34) mit mindestens einem lagerlosen, gasdurchlässigen Wellendurchgang aufweist,
und daß der Überdruck im Gesamtgehäuse (52) durch den steuerbaren Gasauslaß (22) derart geregelt, ist, daß er im Bereich des Getriebegehäuses (34) 1 bar, vorzugsweise 500 mbar, nicht übersteigt.

2. Gas-Expansionsmaschine nach Anspruch 1, dadurch gekennzeichnet, daß die Magnetlagereinheit (16), das Untersetzungsgetriebe (33) und der Generator (51) in auswechselbaren Gehäuseeinheiten (17,32,50) untergebracht sind, die das Gesamtgehäuse (52) bilden.

3. Gas-Expansionsmaschine nach Anspruch 1 oder 2, dadurch gekennzeichnet, daß die Eingangswelle (35) und die Ausgangswelle (38) des Untersetzungsgetriebes (33) Schleuderringe (36,39) zum Freihalten der Wellendurchgänge von Öl aufweisen.

4. Gas-Expansionsmaschine nach einem der Ansprüche 1-3, dadurch gekennzeichnet, daß das Getriebegehäuse (34) einen aus dem Gesamtgehäuse (52) herausgeführten Ölkreislauf (41) zur Ölkühlung aufweist.

5. Gas-Expansionsmaschine nach Anspruch 4, dadurch gekennzeichnet, daß eine Umwälzpumpe (43) des Ölkreislaufs (41) im Innern des Getriebegehäuses (34) angeordnet ist.

6. Gas-Expansionsmaschine nach einem der Ansprüche 1-5, dadurch gekennzeichnet, daß das Innere des Getriebegehäuses (34) mit einer Druckentlastungsleitung (46) verbunden ist, die zu einem außerhalb des Gesamtgehäuses (52) befindlichen Ablaß (48) führt.

7. Gas-Expansionsmaschine nach Anspruch 6, dadurch gekennzeichnet, daß die Druckentlastungsleitung (46) ein Ventil (45) enthält, das öffnet, wenn der Druck im Gesamtgehäuse (52) über ein vorgegebenes Maß abfällt oder im Getriebegehäuse (34) ein Überdruck herrscht, der ein vorgegebenes Maß übersteigt.

8. Gas-Expansionsmaschine nach Anspruch 6, dadurch gekennzeichnet, daß das Getriebegehäuse (34) eine durch ein Ventil (45) versperrbare Druckentlastungsöffnung (44) aufweist.

9. Gas-Expansionsmaschine nach einem der Ansprüche 1-8, dadurch gekennzeichnet, daß das Gesamtgehäuse (52) außer dem Wellendurchgang (21) der Turbinenwelle (15) keinen weiteren Wellendurchgang aufweist.

10. Gas-Expansionsmaschine nach einem der Ansprüche 1-9, dadurch gekennzeichnet, daß eine den Generator (51) enthaltende Gehäuseeinheit (50) an einem aus dem Gesamtgehäuse (52) herausführenden Kühlkreislauf zur Gaskühlung angeschlossen ist.

11. Gas-Expansionsmaschine nach einem der Ansprüche 1-10, dadurch gekennzeichnet, daß die Welle (54) des Generators in gekapselten Wälzlagern (55,56) gelagert ist.

## Claims

1. A gas expansion machine comprising an expansion turbine (10) and a generator (51) driven by the turbine (10) via a transmission gear (33),
**characterized in**
that the shaft (15) of the turbine (10) is arranged for contactless support in a magnetic bearing unit (16),
that the magnetic bearing unit (16) is accommodated together with the reduction gear (33) and the generator (51) in a common pressure-tight general housing (52) comprising a gas inlet (21) towards the low-pressure side of the turbine (10) and provided with a controllable gas outlet (22),
that the reduction gear (33) comprises an oil-containing gear housing (34) including at least one bearingless gas-permeable shaft passage,
and that the overpressure in the general housing (52) is controlled via the controllable gas outlet (22) to not increase above 1 bar, preferably 500 mbar, in the region of the gear housing (34).

2. The gas expansion machine according to claim 1, characterized in that the magnetic bearing unit (16), the reduction gear (33) and the generator (51) are accommodated in exchangeable housing units (17,32,50) forming the general housing (52) .

3. The gas expansion machine according to claim 1 or 2, characterized in that the input shaft (35) and the output shaft (38) of the reduction gear (33) comprise slinger rings (36,39) for keeping the shaft passages free from oil.

4. The gas expansion machine according to any one of claims 1-3, characterized in that the gear housing (34) comprises an oil circuit (41) for oil cooling, extending out of the general housing (52).

5. The gas expansion machine according to claim 4, characterized in that a circulating pump (43) of the oil circuit (41) is arranged in the interior the gear housing (34).

6. The gas expansion machine according to any one of claims 1-5, characterized in that the interior of the gear housing (34) is connected to a pressure-relief line (46) leading to an outlet (48) arranged externally of the general housing (52).

7. The gas expansion machine according to claim 6, characterized in that the pressure-relief line (46) includes a valve (45) which will open when the pressure in the general housing (52) decreases below a predetermined extent or when an overpressure increasing above a predetermined extent prevails in the gear housing (34).

8. The gas expansion machine according to claim 6, characterized in that the gear housing (34) comprises a pressure-relief opening (44) to be locked by a valve (45).

9. The gas expansion machine according to any one of claims 1-8, characterized in that the general housing (52) except for the shaft passage (20) of the turbine shaft (15) comprises no further shaft fitting.

10. The gas expansion machine according to any one of claims 1-9, characterized in that a housing unit (50) accommodating the generator (51) is connected to a cooling circuit for gas cooling extending out of the general housing (52).

11. The gas expansion machine according to any one of claims 1-10, characterized in that the shaft (54) of the generator is supported in encased roller bearings (55,56).

## Revendications

1. Machine de détente à gaz équipée d'une turbine de détente (10) et d'un générateur (51) entraîné par la turbine (10) au moyen d'un dispositif démultiplicateur (33),
caractérisée en ce que
l'arbre (15) de la turbine (10) est logé sans contact dans un palier magnétique (16),
en ce que le palier magnétique (16) est logé avec le dispositif démultiplicateur (33) et le générateur (51) dans un carter général (52) étanche à la pression et commun, qui présente une entrée de gaz (21) du côté basse pression de la turbine (10) et est pourvu d'une sortie de gaz (22) réglable,
en ce que le dispositif démultiplicateur (33) présente un carter d'engrenage (34) contenant de l'huile avec au moins un passage d'arbre sans palier et perméable au gaz,
et en ce que la surpression dans le carter général (52) est réglée par la sortie de gaz (22) réglable de façon telle qu'elle ne dépasse pas un bar, de préférence 500 mbars, dans la zone du carter d'engrenage (34).

2. Machine de détente à gaz selon la revendication 1, caractérisée en ce que le palier magnétique (16), le dispositif démultiplicateur (33) et le générateur (51) sont logés dans des unités de carter (17, 32, 50) interchangeables qui constituent le carter général (52).

3. Machine de détente à gaz selon l'une des revendications 1 ou 2, caractérisée en ce que l'arbre d'entrée (35) et l'arbre de sortie (38) du dispositif démultiplicateur (33) présentent des bagues centrifuges (36, 39) pour maintenir sans huile les passages de l'arbre.

4. Machine de détente à gaz selon l'une des revendications 1 à 3, caractérisée en ce que le carter d'engrenage (34) présente un circuit d'huile (41) sortant du carter général (52) pour le refroidissement de l'huile.

5. Machine de détente à gaz selon la revendication 4, caractérisée en ce qu'une pompe de circulation (43) du circuit d'huile (41) est disposée à l'intérieur du carter d'engrenage (34).

6. Machine de détente à gaz selon l'une des revendications 1 à 5, caractérisée en ce que l'intérieur du carter d'engrenage (34) est relié à une conduite de décharge de pression (46) qui aboutit à une évacuation (48) se trouvant à l'extérieur du carter général (52).

7. Machine de détente à gaz selon la revendication 6, caractérisée en ce que la conduite de décharge de pression (46) contient une vanne (45) qui s'ouvre lorsque la pression dans le carter général (52) décroît au-delà d'une valeur prédéfinie ou qu'il règne dans le carter général (34) une surpression qui dépasse une valeur prédéfinie.

8. Machine de détente à gaz selon la revendication 6, caractérisée en ce que le carter d'engrenage (34) présente une ouverture de décharge de pression (44) pouvant être obstruée par une vanne (45).

9. Machine de détente à gaz selon l'une des revendications 1 à 8, caractérisée en ce que le carter général (52) ne présente pas de passage d'arbre autre que le passage d'arbre (21) de l'arbre de turbine (15).

10. Machine de détente à gaz selon l'une des revendications 1 à 9, caractérisée en ce qu'un carter (50) contenant le générateur (51) est raccordé à un circuit de refroidissement sortant du carter général (52) pour le refroidissement du gaz.

11. Machine de détente à gaz selon l'une des revendications 1 à 10, caractérisée en ce que l'arbre (54) du générateur est logé dans des paliers à roulement (55, 56) encapsulés.
